# EUROPÄISCHE PATENTSCHRIFT

(11) **EP 0 887 561 B1**
(45) Veröffentlichungstag und Bekanntmachung des Hinweises auf die Patenterteilung: **08.01.2003**
(21) Anmeldenummer: 98111324.4
(22) Anmeldetag: 19.06.1998
(51) Int. Cl.: F16B 12/20

(54) **Vorrichtung zum Verbinden zweier Teile**
Device for connecting two pieces
Dispositif pour connecter deux pièces

(30) Priorität: 25.06.1997 DE 29711066 U
(43) Veröffentlichungstag der Anmeldung: 30.12.1998
(73) Patentinhaber: HÄFELE GmbH & Co., D-72202 Nagold (DE)
(72) Erfinder: Häsler, Georg, 72202 Nagold (DE); Kuppler, Karl, 72229 Rohrdorf (DE)
(74) Vertreter: KOHLER SCHMID + PARTNER

(56) Entgegenhaltungen:
- DE-U- 8 910 150
- US-A- 4 984 926

## Beschreibung

Die Erfindung betrifft eine Vorrichtung zum Verbinden zweier Teile, insbesondere Möbelplatten, mit einem Einbautopf und einem im Einbautopf verdrehbar gelagerten Betätigungselement, mittels dem ein Verbindungselement im Einbautopf gehalten werden kann, wobei das Betätigungselement im eingebauten Zustand des Einbautopfes von außen über ein Werkzeug verdrehbar ist.

Zum Befestigen zweier rechtwinklig zueinander verlaufender Möbelplatten greift bei bekannten Verbindungsvorrichtungen ein Verbindungselement an der ersten Möbelplatte in einen an der zweiten Möbelplatte angeordneten Einbautopf ein. Mit Hilfe eines Betätigungselements im Einbautopf, welches durch Verdrehen vom Verbindungselement hintergriffen und dabei vorzugsweise noch weiter ins Innere des Einbautopfes gezogen wird, ist das Verbindungselement im Einbautopf gehalten und festgespannt.

Bei bekannten Verbindungsvorrichtungen ist das Betätigungselement im eingebauten Zustand des Einbautopfes von außen mit Hilfe eines Werkzeugs, meist eines Kreuzschlitz-Schraubendrehers, verdrehbar, indem der Schraubendreher in eine kreuzschlitzförmige Betätigungsaufnahme im Betätigungselement eingeführt wird. Aufgrund der Möbelplatten ist ein Ansetzen des Schraubendrehers parallel zur Drehachse des Betätigungselements oft nicht möglich, und kann daher der Schraubendreher oft nur schräg zur Drehachse angesetzt werden. Damit der Schraubendreher dennoch möglichst in jeder Winkelstellung ausreichend in den Kreuzschlitz eingreifen kann, ist die Form des Kreuzschlitzes im Betätigungselement für einen großen Winkelbereich ausgelegt und in jeder möglichen Winkelstellung allerdings nur ein Kompromiß. Dem Monteur ist aufgrund dieser Form des Kreuzschlitzes keine exakte Schrägstellung des Schraubendrehers beim Verdrehen des Betätigungselements vorgegeben, und es bedarf einer erhöhten Aufmerksamkeit des Monteurs, damit der Schraubendreher beim Verdrehen des Betätigungselements nicht aus der Betätigungsaufnahme abrutscht.

Die DE-U-89 10 150 zeigt bei einem anders aufgebauten Verbindungsbeschlag kein verdrehbares Betätigungselement, sondern eine Schraube. Ausserdem weist diese Schraube an ihrem Kopf keinen Kreuzschlitz auf, sondern ein Zahnprofil, sodass das Werkzeug zum Einschrauben nicht als Schraubendreher sondern als Zahnritzel wirkt. Außerdem ist kein Führungskanal sondern nur eine schräge Abstützfläche vorgesehen, um die Zähne des Werkzeugs und der Schraube gegeneinander unter Druck in Eingriff zu halten. Derartige Zahngetriebe haben jedoch den grundsätzlichen Nachteil, dass die einzelnen Zähne relativ dünn sind, daher leicht abbrechen und keine absolut sichere Betätigung gewährleisten.

Die US-A-4,984,926 zeigt ebenfalls keine Vorrichtung mit einem verdrehbar gelagerten Betätigungselement, sondern auch hier wird die Verbindung lediglich durch eine einmalig zu setzende Schraube hergestellt. Es ist zwar eine Schräge vorhanden, vor allem, um die Schraube leichter einzuführen. Zwar kann man an dieser Schräge einen Schraubendreher ansetzen, jedoch ist die im Kopf der Schraube vorgesehene Aufnahme für diesen in Achsrichtung der Schraube angeordnet. Bei einem Einsetzen des Schraubendrehers ergeben sich ausgesprochen ungünstige Verhältnisse, da einerseits das Drehen der Schraube durch den Winkel zwischen der Längsachse derselben und dem Schraubendreher erheblich erschwert wird und andererseits auch hier ein Abbrechen der Führungsteile in der Aufnahme bzw. des Schraubendrehers befürchtet werden muss.

Es ist daher die Aufgabe der vorliegenden Erfindung, eine Verbindungsvorrichtung der eingangs genannten Art dahingehend weiterzubilden, dass die Handhabung beim Verdrehen des Betätigungselements verbessert wird.

Diese Aufgabe wird erfindungsgemäß durch die im kennzeichnenden Teil des Hauptanspruches aufgeführten Merkmale gelöst.

Durch den Führungskanal, durch welchen das Werkzeug zum Verdrehen des Betätigungselements einzuführen ist, wird dem Monteur die genaue Lage des Schraubendrehers zum Betätigungselement vorgegeben. Der Durchmesser des Führungskanals ist mit möglichst geringem Spiel auf das einzuführende Werkzeug abgestimmt. Z.B. kann der Durchmesser des Führungskanals auf den Schaftdurchmesser eines Schraubendrehers abgestimmt sein. Dadurch ist der Schraubendreher im Führungskanal exakt geführt und kann beim Verdrehen nicht aus der Betätigungsaufnahme abrutschen, so daß sich der Monteur nur auf das Drehen des Schraubendrehers zu konzentrieren braucht.

Bei einer fertigungstechnisch besonders bevorzugten Ausführungsform ist der Führungskanal durch eine Durchgangsbohrung in der Außenwand des Einbautopfes gebildet. Der Einbautopf kann so z.B. als Spritzgußteil mit bereits vorhandener Durchgangsbohrung gefertigt oder ein Metallteil mit separat gefertigter Durchgangsbohrung sein.

Um das Werkzeug in den Führungskanal möglichst verkantungsfrei sowohl einführen als auch dann während seines Verdrehens innerhalb des Führungskanals führen zu können, ist der Führungskanal mindestens 3 mm, vorzugsweise mindestens 4 mm lang.

Bei bevorzugten Ausführungsformen der Erfindung ist vorgesehen, daß der Führungskanal bis zu etwa 30°, vorzugsweise bis zu etwa 22°, gegenüber der Drehachse des Betätigungselements schräg verläuft. Aufgrund des erfindungsgemäß im Führungskanal geführten Werkzeugs ist eine größere Schrägstellung des Werkzeugs als bisher üblich möglich und dadurch die Handhabung der Verbindungsvorrichtung noch zusätzlich verbessert. Prinzipiell kann über den Führungskanal jede Neigung des Werkzeugs bis etwa 25° vorgegeben werden.

Vorzugsweise ist dabei der in Einführrichtung des Werkzeugs vordere Schlitzarm des Kreuzschlitzes in Einführrichtung nach vorne offen ist, was zur weiteren Miniaturisierung des Betätigungselements beiträgt.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: einen Längsschnitt durch die erfindungsgemäße Verbindungsvorrichtung;

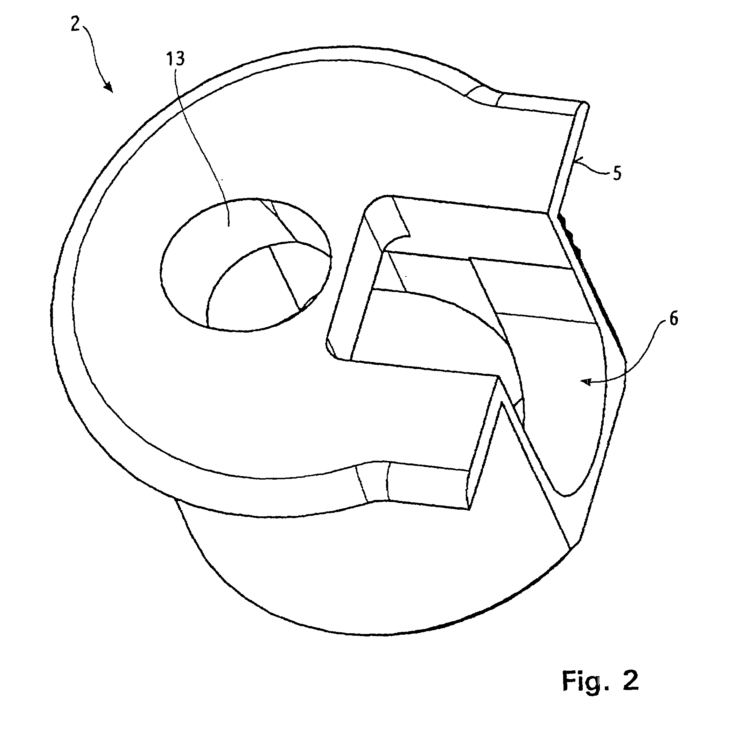

- Fig. 2: in perspektivischer Ansicht einen Einbautopf der Verbindungsvorrichtung in Fig. 1; und
- Fig. 3: in perspektivischer Ansicht ein Betätigungselement der Verbindungsvorrichtung in Fig. 1.

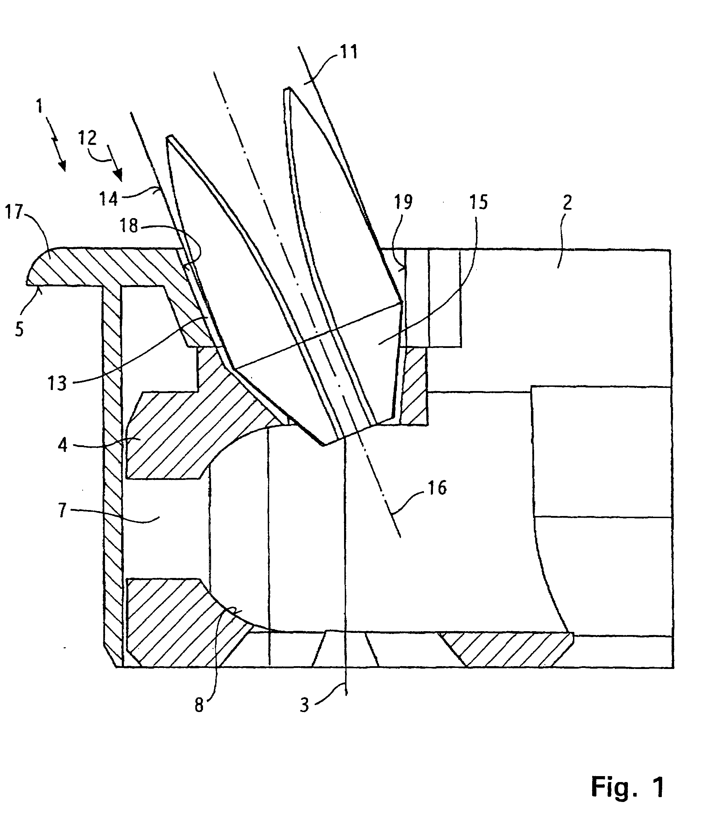

In Fig. 1 ist mit **1** eine Verbindungsvorrichtung gezeigt, die zum Verbinden zweier Möbelplatten dienen kann. Die Verbindungsvorrichtung 1 weist einen Einbautopf **2** und ein um eine Drehachse **3** verdrehbar im Einbautopf 2 gelagertes Betätigungselement **4** auf.

Der Einbautopf 2 wird in eine entsprechende Bohrung der ersten Möbelplatte bis zur Anlage seines Randes **5** eingesetzt, und ein Verbindungselement (nicht dargestellt) der zweiten Möbelplatte greift durch eine Verbindungsaufnahme **6** ins Innere des Einbautopfes 2 ein. Durch Verdrehen des Betätigungselements 4 wird dieses Verbindungselement durch die gegenüber der Verbindungsaufnahme 6 nun verringerte Öffnung **7** im Einbautopf 2 gehalten und aufgrund einer schrägen Innenfläche **8** des Betätigungselements 4 dabei noch in Richtung auf die Drehachse 3 gespannt. Um das Betätigungselement 4 bei in die erste Möbelplatte eingebautem Einbautopf 2 verdrehen zu können, ist eine Betätigungsaufnahme **9** in Form eines Kreuzschlitzes **10** im Betätigungselement 4 vorgesehen, in die ein Schraubendreher **11** von außen schräg in Einführrichtung **12** eingeführt werden kann. Zur Führung dieses schräg gestellten Schraubendrehers 11 ist im Einbautopf 2 ein schräg zur Drehachse 3 verlaufender, auf die Betätigungsaufnahme 9 gerichteter Führungskanal **13** vorgesehen. Mit Hilfe dieses Führungskanals 13 kann der Schaft **14** des Schraubendrehers 11 bzw. seine kreuzförmige Betätigungsspitze **15** mit wenig Spiel eingeführt und geführt verdreht werden. Dabei ist die Betätigungsaufnahme 9 in Richtung der Achse **16** des Führungskanals 13 ausgerichtet, d.h., die Form der Betätigungsaufnahme 9 ist auf die durch den Führungskanal 13 vorgegebene Schrägstellung des Schraubendrehers 11 und seiner Betätigungsspitze 15 abgestimmt.

Der Führungskanal 13 ist in der den Rand 5 ausbildenden Außenwand **17** des Einbautopfes 2 ausgebildet, und seine Länge beträgt im Ausführungsbeispiel etwa 4 mm. Die Achse 16 des Führungskanals 13 verläuft im Ausführungsbeispiel etwa 20° gegenüber der Drehachse 3 des Betätigungselements 4 geneigt.

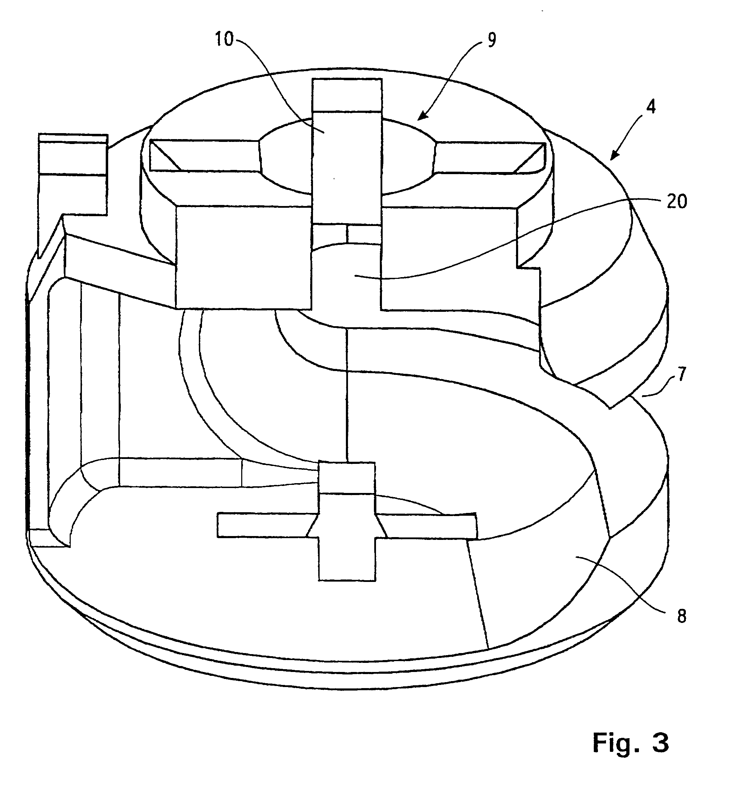

Wie Fig. 1 zeigt, ist im Führungskanal 13 der Schaft 14 des Schraubendrehers 11 nicht ringsum umfänglich geführt, sondern liegt der Schraubendreher 11 im Führungskanal 13 auf dem in Einführrichtung 12 hinteren Umfangsabschnitt **18** mit seinem Schaft 14 und auf dem vorderen Umfangsabschnitt **19** mit seiner Betätigungsspitze 15 an. Der in Einführrichtung 12 des Schraubendrehers 11 vordere Schlitzarm **20** des Kreuzschlitzes 10 (Fig. 3) ist dabei in Einführrichtung 12 nach vorne seitlich offen. In jedem Fall ist die Schrägstellung des Schraubendrehers 11 durch den Führungskanal 13 exakt vorgegeben.

## Patentansprüche

1. Vorrichtung (1) zum Verbinden zweier Teile mit einem Ein-Einbautopf (2) und einem im Einbautopf (2) verdrehbar gelagerten Betätigungselement (4), mittels dem ein Verbindungselement im Einbautopf (2) gehalten werden kann, wobei das Betätigungselement (4) im eingebauten Zustand des Einbautopfes (2) von außen über ein Werkzeug (11) verdrehbar ist,
**gekennzeichnet durch** einen schräg zur Drehachse (3) des Betätigungselements (4) verlaufenden, auf das Betätigungselement (4) gerichteten Führungskanal (13) im Einbautopf (2) und eine Betätigungsaufnahme (9) des Betätigungselements (4) zur Aufnahme des im Führungskanal (13) schräg geführten Werkzeugs (11), wobei als Betätigungsaufnahme (9) ein in Richtung der Achse (16) des Führungskanals (13) ausgerichteter Kreuzschlitz (10) vorgesehen ist.

2. Verbindungsvorrichtung nach Anspruch 1, **dadurch gekennzeichnet, dass** der Führungskanal (13) durch eine Durchgangsbohrung in einer Außenwand (17) des Einbautopfes (2) gebildet ist.

3. Verbindungsvorrichtung nach Anspruch 1, **dadurch gekennzeichnet, dass** der Führungskanal (13) mindestens 3 mm lang ist.

4. Verbindungsvorrichtung nach Anspruch 1, **dadurch gekennzeichnet, dass** der Führungskanal (13) bis zu etwa 30° gegenüber der Drehachse (3) des Betätigungselements (4) schräg verläuft.

5. Verbindungsvorrichtung nach Anspruch 1, **dadurch gekennzeichnet, dass** der Führungskanal (13) auf seinem in Einführrichtung (12) des Werkzeugs (11) vorderen Umfangsabschnitt (19) etwa parallel zur Drehachse (3) des Betätigungselements (4) verläuft.

6. Verbindungsvorrichtung nach Anspruch 1, **dadurch gekennzeichnet, dass** der in Einführrichtung (12) des Werkzeugs (11) vordere Schlitzarm (20) des Kreuzschlitzes (10) in Einführrichtung (12) nach vorne offen ist.

## Claims

1. Device (1) for connecting two parts, having a fixing socket (2) and an actuating element (4) which is rotatably mounted in the fixing socket (2) and by means of which a connecting element can be held in the fixing socket (2), the actuating element (4) being rotatable from the outside by means of a tool (11) when the fixing socket (2) is fitted,
**characterised by** a guide channel (13) in the fixing socket (2) which extends at an angle relative to the axis of rotation (3) of the actuating element (4) and is directed towards the actuating element (4), and by an actuating receiver (9) of the actuating element (4) for receiving the tool (11) guided at an angle in the guide channel (13), wherein there is provided as the actuating receiver (9) a cross-shaped slot (10) oriented in the direction of the axis (16) of the guide channel (13).

2. Connecting device according to claim 1, **characterised in that** the guide channel (13) is formed by a through-bore in an outside wall (17) of the fixing socket (2).

3. Connecting device according to claim 1, **characterised in that** the guide channel (13) is at least 3 mm long.

4. Connecting device according to claim 1, **characterised in that** the guide channel (13) extends at an angle of up to approximately 30° relative to the axis of rotation (3) of the actuating element (4).

5. Connecting device according to claim 1, **characterised in that** the guide channel (13), at its forwardmost circumferential section (19) in the direction of introduction (12) of the tool (11), extends approximately parallel to the axis of rotation (3) of the actuating element (4).

6. Connecting device according to claim 1, **characterised in that** the forwardmost slot arm (20) of the cross-shaped slot (10) in the direction of introduction (12) of the tool (11) is open at the front in the direction of introduction (12).

## Revendications

1. Dispositif (1) pour assembler deux pièces comprenant un réceptacle encastrable (2) et un élément d'actionnement (4) monté dans le réceptacle encastrable (2) de manière à pouvoir tourner, au moyen duquel un élément d'assemblage peut être immobilisé dans le réceptacle encastrable (2), sachant que, lorsque le réceptacle (2) est encastré, il est possible de faire tourner l'élément d'actionnement (4) de l'extérieur au moyen d'un outil (11), **caractérisé par** un canal de guidage (13) dans le réceptacle encastrable (2), qui s'étend en biais par rapport à l'axe de rotation (3) de l'élément d'actionnement (4) et est dirigé vers l'élément d'actionnement (4), et par un logement d'actionnement (9) de l'élément d'actionnement (4) destiné à recevoir l'outil (11) guidé en biais dans le canal de guidage (13), sachant que le logement d'actionnement (9) prévu est une empreinte cruciforme (10) orientée dans la direction de l'axe (16) du canal de guidage (13).

2. Dispositif d'assemblage selon la revendication 1, **caractérisé en ce que** le canal de guidage (13) est constitué par un perçage traversant ménagé dans une paroi extérieure (17) du réceptacle encastrable (2).

3. Dispositif d'assemblage selon la revendication 1, **caractérisé en ce que** le canal de guidage (13) est long d'au moins 3 mm.

4. Dispositif d'assemblage selon la revendication 1, **caractérisé en ce que** le canal de guidage (13) présente une inclinaison par rapport à l'axe de rotation (3) de l'élément d'actionnement (4) pouvant aller jusqu'à 30° environ.

5. Dispositif d'assemblage selon la revendication 1, **caractérisé en ce que** le segment périphérique (19) du canal de guidage (13) qui est situé à l'avant par rapport au sens d'introduction (12) de l'outil (11) s'étend approximativement parallèlement à l'axe de rotation (3) de l'élément d'actionnement (4).

6. Dispositif d'assemblage selon la revendication 1, **caractérisé en ce que** la branche avant (20) de l'empreinte cruciforme (10) par rapport au sens d'introduction (12) de l'outil (11) est ouverte vers l'avant par rapport au sens d'introduction (12).
